(19) European Patent Office — Europäisches Patentamt — Office européen des brevets

(11) **EP 1 066 879 A1**

(12) **EUROPEAN PATENT APPLICATION**
published in accordance with Art. 158(3) EPC

(43) Date of publication:
10.01.2001 Bulletin 2001/02

(51) Int. Cl.$^7$: **B01J 35/10**, B01J 23/88, B01J 38/12, B01J 23/94, C10G 45/08

(21) Application number: 99944860.8

(22) Date of filing: 28.09.1999

(86) International application number:
PCT/JP99/05283

(87) International publication number:
WO 00/18505 (06.04.2000 Gazette 2000/14)

(84) Designated Contracting States:
AT BE CH CY DE DK ES FI FR GB GR IE IT LI LU MC NL PT SE

(30) Priority: 30.09.1998 JP 27750398
06.10.1998 JP 28408598

(71) Applicant:
IDEMITSU KOSAN COMPANY LIMITED
Tokyo 100-0005 (JP)

(72) Inventors:
• NOZAKI, Takao
  Sodegaura-shi Chiba 299-0293 (JP)
• IWAMOTO, Ryuichiro
  Sodegaura-shi Chiba-ken 299-0293 (JP)
• UCHIKAWA, Kei
  Sodegaura-shi Chiba 299-0293 (JP)

(74) Representative:
Gille Hrabal Struck Neidlein Prop Roos
Patentanwälte
Brucknerstrasse 20
40593 Düsseldorf (DE)

(54) **REGENERATED HYDROGENATION CATALYST AND METHODS OF HYDROGENATING HEAVY OIL**

(57) Provided are a regenerated hydrogenation catalyst usable in hydrogenation of heavy oil; and a planned, heavy oil hydrogenation method in which is used a hydrogenation catalyst specifically selected in accordance with the specific hydrogenation plan for the method.

The regenerated hydrogenation catalyst is characterized by its permissible metal limit, MPr, of at least 1, MPr being represented by the following formula [1]:

$$\text{Permissible metal limit, MPr} = (PV/2Vv) \times \{8 \times 10^5 \times (PD)^{1.3}\} \times (Sp/Vp) - VA \qquad [1]$$

wherein;

PV indicates the pore volume of the catalyst while it is unused and fresh ($m^3$/kg),
Vv indicates the volume, in terms of vanadium sulfide, of vanadium having deposited by 1 % by weight on one kg of the catalyst, and this is a constant of $3.8 \times 10^{-6}$ ($m^3$/%kg),
PD indicates the mean pore diameter of the fresh catalyst (m),
Sp indicates the mean outer surface area of one particle of the fresh catalyst ($m^2$),
Vp indicates the mean volume of one particle of the fresh catalyst ($m^3$),
VA indicates the existing vanadium deposit (% by weight), and this is based on the fresh catalyst.

In the planned, heavy oil hydrogenation method, the hydrogenation catalyst to be used is such that its permissible metal limit, MPr of formula [1] is not lower than the vanadium deposition VAp thereon (represented by the following formula [2]) that is planned on the basis of the heavy oil hydrogenation plan for the method:

$$\text{Planned vanadium deposition, VAp} = \sum_{i=1}^{n} (RC_i \times VC_i \times DV_i / CW) \qquad [2]$$

wherein;

VAp indicates the planned vanadium deposition (% by weight), and this is based on the fresh catalyst,
i indicates the i-th hydrogenation with one and the same catalyst in the reactor,
n indicates the last (n-th) hydrogenation with that catalyst in the reactor,
RCi indicates the planned cumulative oil feed in the i-th hydrogenation (kg),
Vci indicates the vanadium content of the crude oil being processed in the i-th hydrogenation (vanadium kg/crude oil kg),
DVi indicates the planned vanadium removal in the i-th hydrogenation (% by weight),
CW indicates the amount of the catalyst in the reactor (kg), and this is based on the fresh catalyst.

Figure 1

**Description**

TECHNICAL FIELD

The present invention relates to a regenerated hydrogenation catalyst and to a method of using it for hydrogenation of heavy oil. Precisely, it relates to a regenerated hydrogenation catalyst of which the permissible metal limit to be calculated from its parameters including its pore volume and pore diameter, the vanadium deposition on it, its outer surface area per its unit volume and others is on a specific level, and to a method of using the catalyst for hydrogenation of heavy oil.

The invention also relates to a method of hydrogenating heavy oil, for which the planned vanadium deposition on the catalyst used is specifically taken into consideration. Precisely, it relates to a method of hydrogenating heavy oil, for which the hydrogenation catalyst to be used is so planned that its permissible metal limit to be calculated from its parameters including its pore volume and pore diameter, the vanadium deposition on it, its outer surface area per its unit volume and others is not lower than the vanadium deposition on the catalyst used in hydrogenation of heavy oil.

BACKGROUND ART

For petroleum purification, there are many methods of purifying different fractions through hydrogenation, for which many catalysts have been developed. Typically, they include desulfurization and denitrogenation catalysts for naphtha, kerosene, gas oil, etc.; desulfurization and denitrogenation catalysts and cracking catalysts for heavy gas oil; desulfurization and denitrogenation catalysts for residual oil, and heavy oil, etc. Of those, the catalysts for hydrogenating naphtha, kerosene and gas oil all having a relatively low boiling point and containing few metal impurities such as vanadium and others are degraded only a little after used.

The used catalysts are not degraded by vanadium and the like, but will be degraded almost exclusively by a small amount of carbonaceous material having deposited thereon. Therefore, they could be regenerated and reused if the carbonaceous deposits could be removed from them, for example, by burning away the deposits. Removing the carbonaceous deposits to regenerate the used catalysts into reusable ones does not require any severe combustion control, as the amount of the deposits is small. Even when once used, some used catalysts will be degraded only a little and could be directly reused as they are. Therefore, the catalysts of that type could be used repeatedly for processing naphtha, kerosene, gas oil and the like, not requiring any specific care.

Recently, hydrogenation catalysts for heavy gas oil and vacuum gas oil have been reused through regeneration or the like, and some methods for regenerating and reusing them have been established. For example, it is known that, in the hydro-cracking process for heavy gas oil, both the hydro-cracking catalyst and the hydro-denitrogenation catalyst for the pretreatment can be regenerated and reused through hydrogen activation or oxygen activation.

On the catalysts used for hydrogenation of these petroleum distillates, few oil-derived metals such as vanadium and the like deposit, since the distillates contain few metal impurities. In addition, the amount of the carbonaceous material that may deposit on the used catalysts is small and the carbonaceous deposits could be readily burned away. While the catalysts with such carbonaceous deposits thereon are regenerated by calcining them, their surfaces will not be heated up to so high temperatures, and the pore structure of the calcined catalyst carriers and even the condition thereof to carry the active metal phase therein will change little. Therefore, the regenerated catalysts could be reused with no difficulty for processing petroleum distillates such as heavy gas oil, vacuum gas oil and others (Studies in Surface and Catalysis, Vol. 88, p. 199, 1994).

However, in hydrogenation of residual oil having a higher boiling point or of heavy oil containing undistillable fractions, a large amount of metallic material and carbonaceous material deposits on the catalysts being used and therefore on the used catalysts, since the oil to be processed contains a large amount of metal impurities and easily-carbonizing substances such as asphaltene, etc. In addition, from the viewpoint of their quality, the used catalysts having metallic deposits and carbonaceous deposits thereon could not be easily regenerated to remove the carbonaceous deposits therefrom by calcining them. What is more, calcining them to remove the carbonaceous deposits therefrom requires severe condition control and is often accompanied by significant change in the pore structure of the calcined catalyst carriers and even the condition thereof to carry the active metal phase therein. For these reasons, regenerating the used catalysts to a reusable level is almost unrealizable (Catal. Today, Vol. 17, No. 4, p. 539, 1993; Catal. Rev. Sci. Eng., 33 (3 & 4), p. 281, 1991). In that situation, therefore, used catalysts with some vanadium deposits thereon are discarded without being recycled.

Japanese Patent Laid-Open No. 123586/1993 discloses a method of regenerating and reusing a used catalyst having from 1 to 2 % of a metal deposit thereon, but discloses neither a method of evaluating the regenerated catalyst nor a method of calculating the life of the regenerated catalyst.

The present invention is to provide a method of regenerating a catalyst which has lost its activity after used in hydrogenation and is therefore of no use, thereby providing the regenerated catalyst reusable for hydrogenation.

The invention is also to provide a method of hydrogenating heavy oil, for which is used the regenerated hydrogenation catalyst.

The invention still provides a method of hydrogenating heavy oil with a hydrogenation catalyst, in which the catalyst to be used is so planned on the basis of its physical properties and use history and of the heavy oil hydrogenation plan with it that it could be prevented from being deactivated by poisoning with vanadium.

DISCLOSURE OF THE INVENTION

We, the present inventors have assiduously studied, and, as a result, have found that, when a catalyst having been used and deactivated in a process of heavy oil hydrogenation is so regenerated that its permissible metal limit to be calculated from its parameters including its pore volume and pore diameter, the vanadium deposition on it, its outer surface area per its unit volume and others is on a specific level, then the regenerated catalyst can be efficiently reused in heavy oil hydrogenation. On the basis of this finding, we have reached the present invention.

We have further found that, when a catalyst for heavy oil hydrogenation is so planned that its permissible metal limit to be calculated from its parameters including its pore volume and pore diameter, the vanadium deposition on it, its outer surface area per its unit volume and others is not lower than the vanadium deposition thereon to be calculated from the heavy oil hydrogenation plan with it, then the thus-planned catalyst can be efficiently used in heavy oil hydrogenation without being deactivated by vanadium deposition thereon. On the basis of this finding, we have completed the invention.

Specifically, the subject matter of the invention is summarized as follows:

(1) A regenerated hydrogenation catalyst for heavy oil, of which the permissible metal limit, MPr to be represented by the following formula [1] is at least 1:

$$\text{Permissible metal limit, MPr} = (PV/2Vv) \times \{8 \times 10^5 \times (PD)^{1.3}\} \times (Sp/Vp) - VA \qquad [1]$$

wherein;

PV indicates the pore volume of the catalyst while it is unused and fresh ($m^3/kg$),
Vv indicates the volume, in terms of vanadium sulfide, of vanadium having deposited by 1 % by weight on one kg of the catalyst, and this is a constant of $3.8 \times 10^{-6}$ ($m^3/\%kg$),
PD indicates the mean pore diameter of the fresh catalyst (m),
Sp indicates the mean outer surface area of one particle of the fresh catalyst ($m^2$),
Vp indicates the mean volume of one particle of the fresh catalyst ($m^3$),
VA indicates the existing vanadium deposit (% by weight), and this is based on the fresh catalyst.

(2) The regenerated hydrogenation catalyst of (1), on which the existing vanadium deposit, VA, is at least 1.
(3) The regenerated hydrogenation catalyst of (1) or (2), of which the carbon content is at most 15 % by weight.
(4) The regenerated hydrogenation catalyst of any of (1) to (3), which has a specific surface area falling between 60 and 220 $m^2/g$.
(5) The regenerated hydrogenation catalyst of any of (1) to (4), which has a pore volume falling between 0.3 and 1.2 cc/g.
(6) The regenerated hydrogenation catalyst of any of (1) to (5), of which the particles have a maximum length falling between 1.6 and 10.0 mm on average with those having a maximum length of not larger than 1.5 mm accounting for at most 10 % by weight and those having a maximum length of not larger than 1.0 mm for at most 5 % by weight.
(7) The regenerated hydrogenation catalyst of any of (1) to (6), of which the particles are substantially columnar and have a mean length in the axial direction falling between 1.6 and 10.0 mm with those having a length of not larger than 1.5 mm accounting for at most 10 % by weight and those having a length of not larger than 1.0 mm for at most 5 % by weight.
(8) The regenerated hydrogenation catalyst of any of (1) to (7), for which a catalyst having at least one metal element of molybdenum, tungsten, nickel and cobalt carried on an inorganic oxide carrier is used in hydrogenation of heavy oil, and then regenerated.
(9) The regenerated hydrogenation catalyst of (8), in which the inorganic oxide carrier is alumina, or alumina containing at most 30 % by weight of at least one of silicon, phosphorus and boron oxides.
(10) The regenerated hydrogenation catalyst of (8) or (9), in which the metal element carried on the carrier is nickel and/or cobalt, as well as molybdenum.
(11) The regenerated hydrogenation catalyst of (10), of which the molybdenum content falls between 0.1 and 25 % by weight in terms of $Mo_2O_3$, and the nickel and/or cobalt content falls between 0.1 and 10 % by weight in terms of

$NiO_2$ or $CoO_2$.

(12) A method for producing the regenerated hydrogenation catalyst of any of (1) to (11), which comprises subjecting a catalyst having been used in heavy oil hydrogenation to regeneration including oxidation.

(13) A method of hydrogenating heavy oil, in which is used the regenerated hydrogenation catalyst of any of (1) to (11).

(14) The method of (13), in which the hydrogenation is hydro-desulfurization or hydrogenation with metal removal.

(15) A method of hydrogenating heavy oil, for which the hydrogenation catalyst to be in the reactor is such that its permissible metal limit MPr to be represented by the above formula [1] is not lower than the vanadium deposition VAp thereon (represented by the following formula [2]) that is planned on the basis of the heavy oil hydrogenation plan for the method:

$$\text{Planned vanadium deposition, VAp} = \sum_{i=1}^{n} (RC_i \times VC_i \times DV_i / CW) \qquad [2]$$

wherein;

VAp indicates the planned vanadium deposition (% by weight), and this is based on the fresh catalyst,
i indicates the i-th hydrogenation with one and the same catalyst in the reactor,
n indicates the last (n-th) hydrogenation with that catalyst in the reactor,
$RC_i$ indicates the planned cumulative oil feed in the i-th hydrogenation (kg),
$Vc_i$ indicates the vanadium content of the crude oil being processed in the i-th hydrogenation (vanadium kg/crude oil kg),
$DV_i$ indicates the planned vanadium removal in the i-th hydrogenation (% by weight),
CW indicates the amount of the catalyst in the reactor (kg), and this is based on the fresh catalyst.

(16) The heavy oil hydrogenation method of (15), in which the planned vanadium removal, DV, is estimated according to the following formula [3]:

$$\text{Planned vanadium removal, DV} = a \times DS + b \qquad [3]$$

wherein;

DS indicates the planned desulfurization (% by weight),
a is a factor, and $1.8 \leq a \leq 2.2$,
b is a factor, and $-105 \leq b \leq -95$.

(17) The heavy oil hydrogenation method of (15) or (16), in which the hydrogenation catalyst used has a specific surface area falling between 60 and 220 $m^2/g$.

(18) The heavy oil hydrogenation method of any of (15) to (17), in which the hydrogenation catalyst used has a pore volume falling between $0.3 \times 10^{-3}$ and $1.2 \times 10^{-3}$ $m^3/kg$.

(19) The heavy oil hydrogenation method of any of (15) to (18), in which the particles of the hydrogenation catalyst used have a maximum length falling between 1.6 and 10.0 mm on average with those having a maximum length of not larger than 1.5 mm accounting for at most 10 % by weight and those having a maximum length of not larger than 1.0 mm for at most 5 % by weight.

(20) The heavy oil hydrogenation method of any of (15) to (19), in which the particles of the hydrogenation catalyst used are substantially columnar and have a mean length in the axial direction falling between 1.6 and 10.0 mm with those having a length of not larger than 1.5 mm accounting for at most 10 % by weight and those having a length of not larger than 1.0 mm for at most 5 % by weight.

(21) The heavy oil hydrogenation method of any of (15) to (20), in which the hydrogenation catalyst used has at least one metal element of molybdenum, tungsten, nickel and cobalt carried on an inorganic oxide carrier.

(22) The heavy oil hydrogenation method of any of (15) to (21), in which the hydrogenation catalyst used is a regenerated catalyst as prepared by subjecting a catalyst having been used in heavy oil hydrogenation to regeneration including oxidation.

(23) The heavy oil hydrogenation method of any of (15) to (22), which is for hydro-desulfurization of heavy oil or for that combined with metal removal.

(24) A method of hydrogenating heavy oil, which is so controlled that VAp2 shall be smaller than the value to be obtained by subtracting VAc from MPr, with MPr indicating the permissible metal limit of the hydrogenation catalyst used, VAc indicating the actual metal deposition on the hydrogenation catalyst used, and VAp2 indicating the residual, planned vanadium deposition on the same to be obtained on the basis of the hydrogenation plan for the residual hydrogenation term, precisely;

VAc indicating the actual vanadium deposition on the hydrogenation catalyst used (% by weight), which is based on the fresh catalyst, and
VAp2 indicating the planned vanadium deposition on the catalyst for the residual hydrogenation term (% by weight), which is based on the fresh catalyst.

(25) The heavy oil hydrogenation method of (24), which is for hydro-desulfurization of heavy oil, for metal removal from heavy oil, or hydro-desulfurization thereof combined with metal removal.

BRIEF DESCRIPTION OF THE DRAWINGS

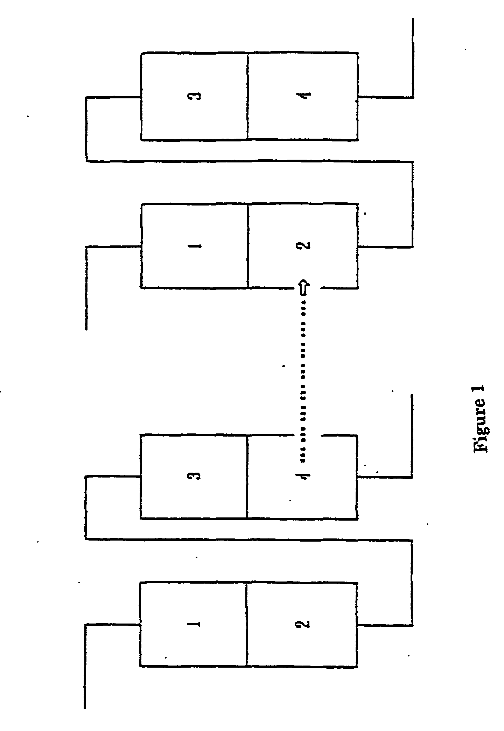

Fig. 1 is a conceptual view illustrating Example 1 of the invention. In this, the reactor unit used comprises a reactor zone having a first bed 1 and a second bed 2, and another reactor zone having a third bed 3 and a fourth bed 4. The used catalyst in the fourth bed 4 is regenerated, and the regenerated catalyst is filled into the second bed 2. In Example 1, the regenerated catalyst thus in the second bed 2 is evaluated.

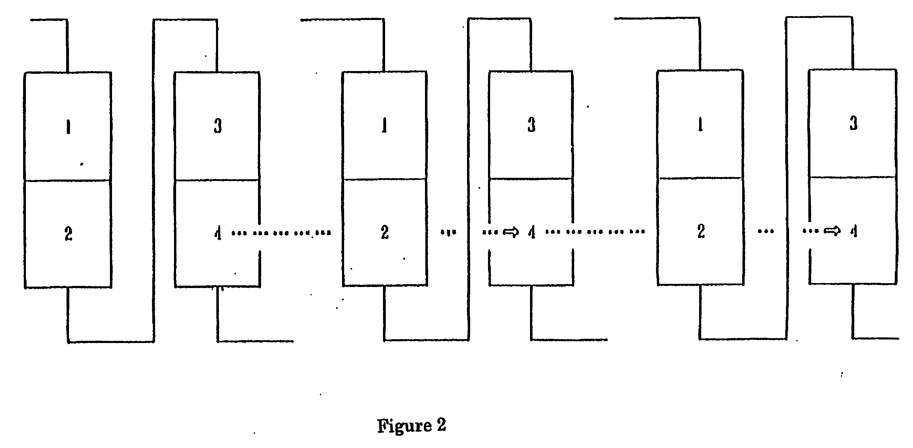

Fig. 2 is a conceptual view illustrating Example 2 of the invention. In this, the used catalyst in the fourth bed 4 is regenerated, and the regenerated catalyst is again filled into the fourth bed 4, in which the catalyst once regenerated is evaluated. After having been used for its evaluation, the used catalyst is again regenerated, and then still again filled into the fourth bed 4. In Example 2, the catalyst regenerated two times is again evaluated.

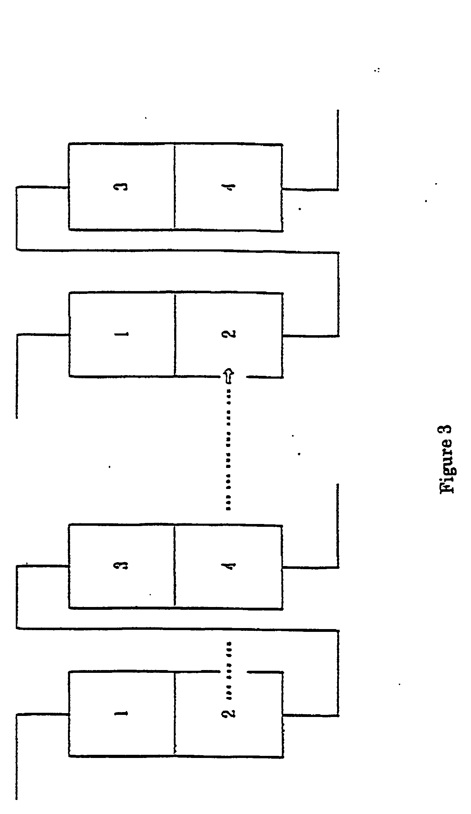

Fig. 3 is a conceptual view illustrating Example 3 of the invention and Comparative Example 1. In this, the used catalyst in the second bed 2 is regenerated, and the regenerated catalyst is re-filled into the second bed 2. In Example 3 and Comparative Example 1, the regenerated catalyst thus in the second bed 2 is evaluated.

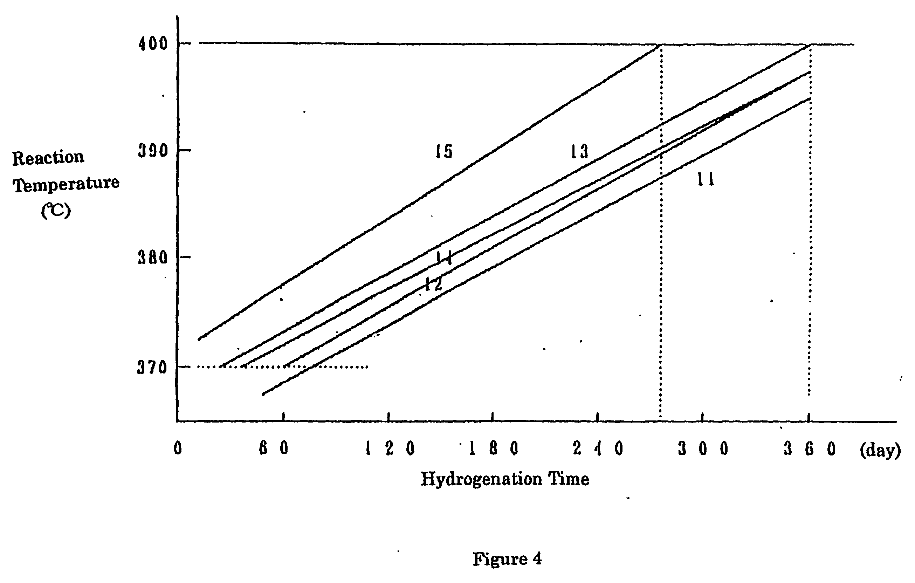

Fig. 4 is a graph showing the temperature change in hydrogenation relative to the hydrogenation time. In this, No. 11 indicates the reaction temperature change in the evaluation test in Example 1; 12 indicates the reaction temperature change in the first evaluation test in Example 2; 13 indicates the reaction temperature change in the second evaluation test in Example 2; 14 indicates the reaction temperature change in the evaluation test in Example 3; and 15 indicates the reaction temperature change in the evaluation test in Comparative Example 1.

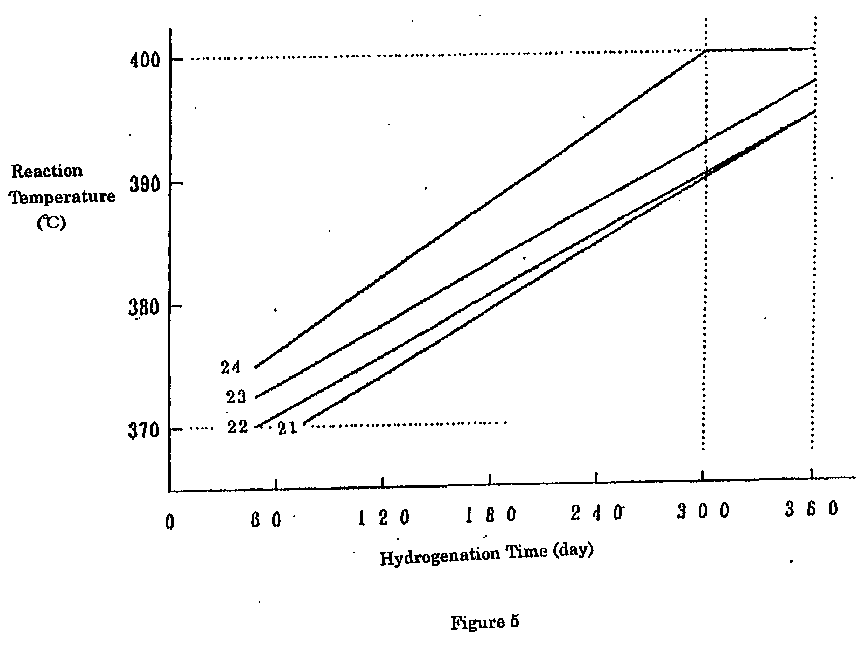

Fig. 5 is a graph showing the temperature change in hydrogenation relative to the hydrogenation time. In this, No. 21 indicates the reaction temperature change in hydrogenation in Example 4; 22 indicates the reaction temperature change in hydrogenation in Example 5; 23 indicates the reaction temperature change in hydrogenation in Example 6; and 24 indicates the reaction temperature change in hydrogenation in Comparative Example 2.

BEST MODES OF CARRYING OUT THE INVENTION

Embodiments of the invention are described below.
The invention provides a regenerated hydrogenation catalyst, for which a fresh hydrogenation catalyst is once used in hydrogenation of heavy oil or the like, then the used and therefore degraded catalyst is so screened that the selected moiety could have specific properties and composition, and the thus-selected catalyst is subjected to regeneration including washing, oxidation and the like so that the regenerated catalyst could be reused for hydrogenation. The invention also provides a method of using the regenerated catalyst for hydrogenation of heavy oil.
In addition, the invention provides a method of hydrogenating heavy oil, for which is used a hydrogenation catalyst having specific properties and composition in accordance with a specific hydrogenation plan.
Heavy oil is processed for various purposes through hydrogenation. The essential object of the process of heavy oil hydrogenation is for desulfurization and cracking of heavy oil. In many cases, however, the process is also for reducing the metal content and the nitrogen content of the processed oil. For example, in the process of desulfurization for heavy oil production, the sulfur content and also the nitrogen content and the metal content of the product heavy oil are important quality control items in many cases.
For example, the process of desulfurization of heavy oil is often employed for pretreatment for the catalytic cracking process for gasoline production. The crude oil to be catalytically cracked for that purpose is required to have a reduced sulfur content and even a reduced nitrogen content and a reduced metal content. As the case may be, hydrogen addition to aromatic hydrocarbons is often needed in the process. Further, the hydrogenation process often requires a hydro-cracking catalyst in order that a large amount of gas oil fractions with high value added could be produced in the process. In the hydro-cracking process, the nitrogen compound which may be in the crude oil and which will act as a catalyst poison to the hydro-cracking catalyst will be previously removed from the crude oil through pre-denitrogenation.

Heavy oil hydrogenation as referred to herein is meant to indicate various types of hydrogenation of heavy oil such as those mentioned above, naturally including hydrogenation alone to be effected for the essential object of itself, as well as essential hydrogenation to be combined with any other types of hydrogenation, and also subsidiary hydrogenation to be effected as pre-treatment or post-treatment for other reactions.

The catalyst for the invention is described. For the regenerated hydrogenation catalyst of the invention, an ordinary heavy oil hydrogenation catalyst (including pre-sulfurized catalysts) is used at least once for hydrogenation of heavy oil or the like, and the used catalyst is regenerated. In general, the catalyst having been used for hydrogenation of crude oil shall have carbon and vanadium deposits thereon, on which the deposits are derived from the crude oil processed with it, and the "used catalyst" is taken out of the reactor, and then regenerated.

On the other hand, the catalyst to be used in heavy oil hydrogenation in the invention, in which the planned vanadium deposition on the catalyst is specifically taken into consideration, may be any ordinary heavy oil hydrogenation catalyst (including pre-sulfurized catalysts). It includes catalysts having been used for hydrogenation of heavy oil and others, that is, used catalysts, and also regenerated catalysts that are prepared by regenerating the used catalysts. In general, it includes "used catalysts" having carbon and vanadium deposits thereon, on which the deposits are derived from the crude oil processed with them, and also regenerated catalysts that are prepared by regenerating the used catalysts outside reactors.

According to the knowledge relating to the invention, catalysts having been deactivated by vanadium deposition thereon can be screened to select those of which the activity is still enough for use, and such reusable catalysts can be specified. In addition, of the catalyst being used in hydrogenation, the moiety having been deactivated by vanadium deposition thereon to be no use any more can be separated from the other still active to the last of hydrogenation, and the usable moiety of the catalyst can be specified.

The regenerated hydrogenation catalyst of the invention is not specified by only the vanadium deposition thereon but shall be specified by a specific relationship between the vanadium durability of the individual catalysts and the actual vanadium deposition thereon.

Concretely, the regenerated hydrogenation catalyst of the invention is such that its permissible metal limit, MPr to be represented by the following formula [1] is at least 1:

$$\text{Permissible metal limit, MPr} = (PV/2Vv) \times \{8 \times 10^5 \times (PD)^{1.3}\} \times (Sp/Vp) - VA \qquad [1]$$

wherein;

PV indicates the pore volume of the catalyst while it is unused and fresh ($m^3$/kg),
Vv indicates the volume, in terms of vanadium sulfide, of vanadium having deposited by 1 % by weight on one kg of the catalyst, and this is a constant of $3.8 \times 10^{-6}$ ($m^3$/%kg),
PD indicates the mean pore diameter of the fresh catalyst (m),
Sp indicates the mean outer surface area of one particle of the fresh catalyst ($m^2$),
Vp indicates the mean volume of one particle of the fresh catalyst ($m^3$),
VA indicates the existing vanadium deposit (% by weight), and this is based on the fresh catalyst.

The permissible metal limit, MPr of formula [1] is an index of permissible vanadium deposition on the catalyst before the catalyst is deactivated by vanadium deposition thereon to lose its life. A larger value of MPr indicates that the catalyst allows a higher degree of vanadium deposition thereon. In the invention, MPr is at least 1, but preferably at least 3, more preferably at least 5. In case where crude oil to be processed contains much vanadium, or in case where crude oil is processed under severe hydrogenation conditions to ensure increased vanadium removal, MPr is preferably higher. For commercially-available catalysts, even fresh catalysts on which the existing vanadium deposit, VA, is 0 % generally have MPr of at most 50. Many catalysts for metal removal have MPr of from 20 to 35, and many desulfurization catalysts have MPr of from 10 to 25.

The first member of formula [1] indicates the permissible vanadium deposition on the fresh catalyst, and this is defined by the initial physical properties including the pore volume and others of the fresh catalyst, and is not varied by the use and regeneration of the catalyst. In formula [1], PV indicates the pore volume of the catalyst while it is unused and fresh. Vv indicates the volume, in terms of vanadium sulfide, of vanadium having deposited by 1 % by weight on one kg of the fresh catalyst, and this is a constant of $3.8 \times 10^{-6}$ ($m^3$/%kg). In ordinary hydrogenation of oil, it is believed that vanadium deposits as vanadium sulfide on the catalyst used. PD indicates the mean pore diameter of the fresh catalyst. PV and PD are measured through nitrogen adsorption, for which the catalyst is baked at 500°C before measurement.

Of the first member of formula [1], the part expressed by $\{8 \times 10^5 \times (PD)^{1.3}\}$ indicates the diffusion depth of vanadium to the pores in the catalyst, and this is derived from the data of various types of catalysts analyzed. As a rule, it is said that the diffusion depth is proportional to (diffusion coefficient/reaction rate constant)$^{-0.5}$, and the diffusion coefficient is proportional to the pore diameter of a catalyst (see Handbook for Chemical Engineering, Chapter 27). Through our studies, however, we, the present inventors have found that the vanadium diffusion depth in the catalyst of the invention is proportional to (pore diameter of the catalyst, PD)$^{1.3}$, as in formula [1].

Sp indicates the outer surface area of one particle of the fresh catalyst, and this is in fact a mean value. Vp indicates the volume of one particle of the fresh catalyst. Like Sp, this is also a mean value. (Sp/Vp) indicates the outer surface area per the volume of each catalyst particle, and is also a mean value. This shall be defined by the shape of the fresh catalyst just after its preparation.

The second member of formula [1], VA indicates the existing vanadium deposit (% by weight), and this is based on the fresh catalyst. Concretely, it indicates the amount of vanadium having deposited on the used catalyst. The invention is especially effective to regenerated hydrogenation catalysts with VA of at least 1. Catalysts with VA of smaller than 1 are near to fresh catalysts, and some of them could be used without being regenerated. VA is expressed herein as the vanadium deposit on catalysts, but vanadium does not all the time need to deposit on catalysts. As the cast maybe, vanadium may penetrate into the pores of catalysts or even into catalysts, or may react with catalyst components and others. To that effect, the terminology vanadium deposition as referred to herein includes all forms of vanadium on or in catalysts. In general, many used catalysts have VA of from 0 % to 70 %. Concretely, catalysts used upstream in the reaction zone will have a high value of VA falling between 30 % and 70 %, while those used downstream therein will have VA of not higher than 10 %.

In general, vanadium does not form active ingredients of catalysts, but is derived from minor impurities existing in crude oil to be hydrogenated. For first screening used catalysts to select the catalyst of the invention, it is convenient to use the vanadium deposition on the used catalysts as the index. The vanadium deposition is nearly the same both on used catalysts and on regenerated catalysts that are prepared by regenerating used catalysts. Therefore, it is desirable to screen used catalysts to remove unfavorable ones, before they are regenerated. Preferably, the regenerated hydrogenation catalyst of the invention has a vanadium content of at most 35 %, more preferably at most 20 %. (In this connection, the metal content of the catalyst referred to herein is based on the weight of the catalyst having been oxidized at a temperature not lower than 400°C until it shows no more weight loss, and is represented in terms of % by weight of the metal in the form of its oxide. The same shall apply to the content of other metals in catalysts.)

Also preferably, the carbon content of the regenerated hydrogenation catalyst of the invention falls between 0.3 and 15 %, more preferably between 0.3 and 10 %. (The carbon content of the catalyst referred to herein is based on the weight of the catalyst having been oxidized at a temperature not lower than 400°C until it shows no more weight loss, and is represented in terms of % by weight of carbon in the catalyst. The same shall apply hereinunder.) Most used catalysts have a carbon content of from 10 to 70 % or so, and their carbon content can be reduced through regeneration treatment to remove the carbonaceous substances from them. The activity of used catalysts having a large carbon content is low, as their surfaces are covered with carbonaceous substances. Suitably reducing the carbon content of such used catalysts through regeneration treatment recovers their activity. However, excessive oxidation to reduce the carbon content of used catalysts to lower than 0.3 % will degrade the active ingredients of the catalysts, whereby the catalysts will be deactivated. Therefore, the treatment for reducing the carbon content of used catalysts will require some care.

Catalysts used under severe hydrogenation conditions or those subjected to oxidation especially to calcining treatment for regeneration will have lowered catalytic activity, since their surface will be overheated and their pore structure and their condition to carry active metals will be thereby changed. To evaluate the activity of such used or regenerated catalysts, the specific surface area and the pore volume of the catalysts may be referred to. These will gradually decrease owing to adhesion of impurities to the catalysts during hydrogenation and to degradation of the catalysts under heat, and will further decrease during regeneration. It is desirable that the regenerated hydrogenation catalyst of the invention still has about 70 % specific surface area and pore volume of the unused fresh catalyst. Concretely for its physical properties, it is desirable that the regenerated hydrogenation catalyst of the invention has a specific surface area falling between 60 and 220 $m^2$/g, more preferably between 100 and 200 $m^2$/g, and has a pore volume falling between 0.3 and 1.2 cc/g, more preferably between 0.4 and 0.8 cc/g. In ordinary hydrogenation, it is believed that vanadium will deposit on catalysts as vanadium sulfide. The specific surface area and the pore volume are measured through nitrogen adsorption, for which the catalyst is baked at 500°C before measurement.

Next described is the catalyst to be used in the method of the invention for hydrogenating heavy oil, for which the planned vanadium deposition on the catalyst is taken into consideration.

The catalyst to be used in the method of the invention for hydrogenating heavy oil, for which the planned vanadium deposition on the catalyst is taken into consideration, is such that its permissible metal limit, MPr to be represented by the above formula [1] is not lower than the planned vanadium deposition VAp to be represented by the following formula [2]:

$$\text{Planned vanadium deposition, } VAp = \sum_{i=1}^{n} (RCi \times VCi \times DVi/CW) \qquad [2]$$

wherein;

VAp indicates the planned vanadium deposition (% by weight), and this is based on the fresh catalyst,
i indicates the i-th hydrogenation with one and the same catalyst in a reactor,
n indicates the last (n-th) hydrogenation with that catalyst in the reactor,
RCi indicates the planned cumulative oil feed in the i-th hydrogenation (kg),
Vci indicates the vanadium content of the crude oil being processed in the i-th hydrogenation (vanadium kg/crude oil kg),
DVi indicates the planned vanadium removal in the i-th hydrogenation (% by weight),
CW indicates the amount of the catalyst in the reactor (kg), and this is based on the fresh catalyst.

The permissible metal limit, MPr of formula [1] is an index of permissible vanadium deposition on the catalyst before the catalyst is deactivated by vanadium deposition thereon to lose its life. A larger value of MPr indicates that the catalyst allows a higher degree of vanadium deposition thereon. Preferably, MPr is at least 3, more preferably at least 5, even more preferably at least 7. In case where crude oil to be processed contains much vanadium, or in case where crude oil is processed under severe hydrogenation conditions to ensure increased vanadium removal, MPr is preferably higher.

The second member of formula [1], VA indicates the existing vanadium deposit on the catalyst. Unused fresh catalysts have VA of 0. In formula [1], VA is preferably 0.1 % or more. This is because may used catalysts generally have VA of from 0.1 % to 70 %.

The planned vanadium deposition VAp of formula [2] indicates the vanadium deposition on the catalyst (in terms of % by weight based on the fresh catalyst), which is so planned in the hydrogenation method of the invention that vanadium will deposit on the catalyst from the start to the end of hydrogenation with the catalyst, and this is the planned total vanadium deposition on the catalyst during the full-term hydrogenation process. Concretely, the planned vanadium deposition, VApi in the i-th hydrogenation with i varying from 1 to n, a positive number, is calculated for the planned full-term hydrogenation for which the hydrogenation conditions are varied n times, and the total of the data of individual VApi's is the planned vanadium deposition VAp. (In formula [2], the parameters with the varying number i are those for the i-th hydrogenation, and the same shall apply hereinunder.) The sum total of the product to be obtained by multiplying the planned cumulative oil feed, RCi (this is the planned cumulative oil feed in the i-th hydrogenation (kg)) by the vanadium content of the crude oil being processed, Vci (this is the vanadium content of the crude oil being processed in the i-th hydrogenation (vanadium kg/crude oil kg)) and by the planned vanadium removal in the i-th hydrogenation, Dvi (% by weight) is divided by the amount of the catalyst in the reactor, CW (kg) to give the planned vanadium deposition, VAp. Accordingly, the planned vanadium deposition, VAp is the percentage of the vanadium deposition that will be on the catalyst during the full-term hydrogenation.

The planned vanadium deposition VAp may be estimated from the planned desulfurization rate DS. Concretely, it may be calculated from the planned desulfurization of the crude oil to be processed, according to the following formula:

$$DV = a \times DS + b \qquad [3]$$

wherein a and b are factors satisfying the following:

$1.8 \leq a \leq 2.2$,
$-105 \leq b \leq -95$.

Where the hydrogenation is effected under a plurality of different hydrogenation conditions, every planned vanadium deposition VAp is calculated for every hydrogenation condition in accordance with the formula [3]. Concretely, the i-th planned vanadium deposition for the i-th hydrogenation shall be VApi. The factors a and b vary, depending on the type of the catalyst used and the reaction condition employed. Preferably, the field-proven data for the factors a and b are previously obtained for the individual catalysts and reaction conditions to be employed, and the data are used. For ordinary heavy oil hydrogenation catalysts, a and b fall within the ranges as above. In case where the field-proven data for the factors a and b could not be obtained, the uppermost values in the defined ranges may be used for them with few difficulties. With a = 2 and b = -100, almost satisfactory results could be obtained.

For the catalyst to be used in the planned vanadium deposition-based, heavy oil hydrogenation method of the invention, it is desirable that used catalysts are previously screened to remove unfavorable ones before they are regenerated, like those for the above-mentioned, regenerated hydrogenation catalyst of the invention. Preferably, the catalyst to be used in the method has a vanadium content of at most 35 %, more preferably at most 20 %, like the regenerated hydrogenation catalyst.

In case where the catalyst to be used in the planned vanadium deposition-based, heavy oil hydrogenation method of the invention is obtained from used catalysts or regenerated catalysts, it is also desirable that the carbon content of the catalyst falls between 0.3 and 15 %, more preferably between 0.3 and 10 %, like that of the regenerated hydrogenation catalyst. The reason for it is the same as that mentioned hereinabove.

Preferably, the surface area of the catalyst to be used in the planned vanadium deposition-based, heavy oil hydrogenation method of the invention falls between 60 and 220 $m^2$/g, more preferably between 100 and 200 $m^2$/g, like that of the regenerated hydrogenation catalyst. Also preferably, the pore volume of the catalyst to be used in the method falls between 0.3 and 1.2 cc/g, more preferably between 0.4 and 0.8 cc/g.

Next described are the shape and the size of the catalyst. Catalysts for heavy oil hydrogenation are generally produced through extrusion pelletization, and they are substantially in the form of columnar pellets. Their cross section is generally circular, but some are modified to have an increased outer surface, for example, as three-leaved or four-leaved ones. In addition, spherical catalysts are also used conveniently. Spherical catalysts are favorable to the case where catalysts having high compression strength and high abrasion resistance are needed.

After having once used for hydrogenation of heavy oil and others, the catalysts are broken or caked and therefore some will lose their original shape. However, many of them could maintain their original shape, and it is desirable that the catalysts still having their original shape are selected and used. Concretely, it is desirable that caked bulky catalysts or powdered catalysts are removed through screening. If catalysts not screened are filled into reactors and used therein, the pressure loss in the catalyst layer will increase while crude oil runs therethrough along with a hydrogen gas flow, or, as the case may be, the oil flow and the gas flow will be undesirably channeled through the catalyst layer. If so, good hydrogenation through the catalyst layer will be impossible.

For easy operation, it is desirable that the size of the catalyst to be used is controlled to a desired one though the shape thereof may differ from the original one in some degree. For substantially columnar catalyst pellets (these are produced through extrusion pelletization and most of them are columnar or substantially columnar), it is desirable that their length in the axial direction falls between 1.6 and 10 mm on average, more preferably between 2 and 5 mm. Further desirably, those having a length of not larger than 1.5 mm account for at most 10 % by weight, and those having a length of not larger than 1.0 mm account for at most 5 % by weight. For spherical catalysts and substantially non-columnar catalysts, it is desirable that their major length (the major length indicates the length of the longest side of the catalyst) falls between 1.6 and 10 mm on average, more preferably between 2 and 5 mm. Further desirably, those having a major length of not larger than 1.5 mm account for at most 10 % by weight, and those having a major length of not larger than 1.0 mm account for at most 5 % by weight.

Next described are fresh catalysts, regenerated catalysts and regeneration treatment. The fresh catalysts include not only those not used anywhere for oil hydrogenation but also those having been once used for oil hydrogenation with using them being stopped within a short period of time owing to machine trouble or the like, and therefore capable of being again used directly as they are. For the latter, even the catalysts having been once used only within a short period of time are within the scope of the fresh catalysts, so far as they still have the original hydrogenation activity without being specifically processed for re-activation, for example, by taking them out of reactors, and then subjecting them to some regeneration treatment including screening, washing, oxidation, etc. (In this case, the vanadium deposition on the catalysts is not 0.)

The fresh catalysts may be ordinary, commercially-available ones, or may also be specifically prepared ones. For using them for hydrogenation, they may be pre-sulfurized.

Used catalysts are from the fresh catalysts having been used for hydrogenation of heavy oil and others. They have heavy oil-derived vanadium deposits thereon. Vanadium functions little for hydrogenation, and it rather weakens the activity of the active metals of the catalysts, and often clogs the pores of the catalysts to further lower the hydrogenation activity of the catalysts. The used catalysts as referred to herein are those contaminated with vanadium deposits in some degree through heavy oil hydrogenation. The used catalysts include those having been once regenerated and then again used.

The regenerated catalysts are those to be obtained by re-activating used catalysts through regeneration treatment, for which the used catalysts are those having been once used for hydrogenation and therefore not having the necessary hydrogenation activity any more. The hydrogenation of heavy oil and others as referred to herein is generally for desulfurization, but may include metal removal, denitrogenation, removal of aromatic fractions, cracking, etc. The hydrogenation is generally for heavy oil, but may also be for distillate oil fractions such as heavy gas oil and others. Catalysts used for such hydrogenation may be regenerated for use in the invention, so far as the regenerated catalysts can be used for hydrogenation of heavy oil.

To regenerate them, for example, used catalysts may be washed with solvents to remove oily residues from them; they are calcined to remove carbonaceous residues, sulfur residues, nitrogen residues and others from them; or they are screened to remove the aggregated cakes or the pulverized fine particles from them and to select normally-shaped particles from them. Preferably, used catalysts are regenerated through oxidation, more preferably outside reactors where the catalysts are used.

One preferred embodiment of regenerating used catalysts having a large amount of carbonaceous deposits thereon is described. The used catalyst to be regenerated is first washed with a solvent. As the solvent, preferably used are toluene, acetone, alcohol, and petroleum fractions such as naphtha, kerosene, gas oil, etc. Any other solvents are usable, so far as they can easily dissolve the organic substances having deposited on used catalysts. To wash the used catalyst, gas oil may be circulated through the hydrogenation reactor in which the catalyst is still therein, and thereafter nitrogen gas or the like may be passed through it at a temperature falling between 50 and 200°C or so thereby drying the catalyst. In another embodiment, the catalyst having been first washed with the circulating gas oil is taken out of the reactor, and is kept wetted with the gas oil to prevent it from becoming too hot or from being spontaneously fired, and thereafter it may be dried in any desired time. In still another embodiment, the used catalyst taken out of the reactor may be ground to pulverize the aggregates; or the powdery fragments and also scale and other impurities may be removed from it. In this, the thus-processed, used catalyst is washed with gas oil and then with naphtha, and is thereafter dried. The mechanical pre-treatment facilitates the step of washing and drying the used catalyst. Toluene is favorable to washing a small amount of the used catalyst, as completely removing oily residues from it.

The catalyst having been thus washed to remove oily residues and impurities from it must be oxidized to remove carbonaceous residues, in order that the catalyst could exhibit its activity to a satisfactory degree. To oxidize it, in general, the catalyst is calcined in an oxidizing atmosphere having a controlled temperature and a controlled oxygen concentration. If the temperature of the atmosphere is too high, or if the oxygen content thereof is too large, the surface of the catalyst will be heated too much so that the crystal morphology of the active metals carried therein and even the metal-carrying condition of the catalyst will vary, or the pores existing in the carrier of the catalyst will reduce and the activity of the catalyst will be lowered. On the contrary, if the temperature of the atmosphere is too low, or if the oxygen content thereof is too small, the carbonaceous residues existing in the catalyst could not be sufficiently burned and removed away, and regenerating the catalyst to make it have a satisfactory degree of activity will be impossible. Preferably, the atmosphere temperature falls between 200 and 800°C, more preferably between 300 and 600°C.

It is desirable that the oxygen content of the oxidizing atmosphere is controlled to fall between 1 and 21 %. However, depending on the calcining method, especially on the condition how the catalyst is contacted with the calcining gas, the oxygen content of the atmosphere may be controlled to fall within a desired range. It is important to oxidize and remove the carbonaceous residues from the catalyst while controlling the surface temperature of the catalyst by varying the temperature and the oxygen content of the atmosphere and varying the flow rate of the atmosphere gas. It is also important to prevent the regenerated catalyst from having a reduced specific surface area and a reduced pore volume, while preventing the crystal structure of the hydrogenation-active metals, nickel and molybdenum, in the catalyst from being varied through the oxidation treatment, and further preventing the condition of the crystal particles carried in the catalyst from being varied therethrough.

It is desirable that the calcined catalyst is screened through sieving or the like to remove powdery fine particles and others, thereby selecting only the normally-shaped particles from it for use herein as the regenerated catalyst. If not screened, the catalyst layer will be clogged with the oil flow running therethrough or the oil flow will be undesirably channeled through the catalyst layer, whereby the flow pressure loss in the reactor will increase and it would become impossible to smoothly drive the reaction system, even though the initial activity of the regenerated catalyst could be high to a satisfactory degree.

In the planned vanadium deposition-based, heavy oil hydrogenation method of the invention, usable are any of fresh catalysts, used catalysts and regenerated catalysts. For their definition, the fresh catalysts, the used catalysts and the regenerated catalysts for the method are the same as those mentioned hereinabove; and the regeneration method may also be the same as that mentioned hereinabove.

The catalysts of the invention are used for hydro-desulfurization or the like of heavy oil and others. Naturally, therefore, they must have the capability of hydrogenation. As their basic constitution, preferred are catalyst compositions having at least one active metal of molybdenum, tungsten, nickel and cobalt on an inorganic oxide carrier. For the inorganic oxide carrier, for example, preferred are alumina, alumina-phosphorus, alumina-boron, alumina-silicon or the like. (In the carrier, phosphorus, boron and others are in the form of their oxides.) In these examples, phosphorus, boron and others are carrier components. However, these elements could also form active components. The examples mentioned herein are not whatsoever intended to exclude the use of these elements as active components. Preferred active metals are molybdenum and/or tungsten, as well as cobalt and/or nickel, all in the form of their oxides. Of those, more preferred are catalysts of nickel/molybdenum carried on an alumina carrier; catalysts of nickel/molybdenum carried on an alumina-phosphorus carrier; catalysts of nickel/molybdenum carried on an alumina-boron carrier; and catalysts of nickel/molybdenum carried on an alumina-silicon carrier.

Where the alumina carrier contains any of phosphorus, silicon and boron, the content of at least one oxide with phosphorus, silicon and boron in the catalyst is preferably at most 30 %, more preferably from 0.1 to 10 %, even more preferably from 0.2 to 5 %. (The content of phosphorus and others in the catalyst is based on the weight of the catalyst having been oxidized at a temperature not lower than 400°C until it shows no more weight loss, and is represented in terms of % by weight of phosphorus and others in the catalyst.) In addition, since the catalysts are for processing heavy oil, it is also desirable that they contain the active metals, cobalt or nickel, and molybdenum, in an amount of from 0.1 to 25 %, more preferably from 0.2 to 9 % for molybdenum and in an amount of from 0.1 to 10 %, more preferably from 0.2 to 8 % for cobalt or nickel. (The metal content of the catalyst is based on the weight of the catalyst having been oxidized at a temperature not lower than 400°C until it shows no more weight loss, and is represented in terms of % by weight of the metal in the form of its oxide. The same shall apply to the content of other metals in catalysts.)

Fresh catalysts having the constitution as above are produced in an ordinary manner, for example, in an ordinary method of producing heavy oil hydro-desulfurization catalysts. Using the fresh catalyst, reduced crude is hydro-desulfurized for one year. The used catalyst is taken out of the reactor, and regenerated according to the regeneration method mentioned above. This is an ordinary manner for providing the regenerated hydrogenation catalyst of the invention. Even the catalyst used in the most upstream reaction zone and even that in the top of the reactor are usable herein, so far as they meet the requirements of the invention. However, they often have a large amount of scale and metal deposits thereon. Therefore, it is desirable to remove them by screening.

Next described concretely is the heavy oil hydrogenation with the catalyst of the invention. The reaction conditions for this are not specifically defined, so far as the catalyst meeting the requirements mentioned above is used. General conditions for the heavy oil hydrogenation are described. In the hydrogenation process, generally used are fixed-bed reactors. However, any others including moving-bed reactors and boiling-bed reactors are usable with no problem. The reactant flow may be either an upward flow or a downward flow. Preferred embodiments of the hydrogenation are desulfurization of heavy oil, metal removal from heavy oil, and hydro-desulfurization of heavy oil combined with metal removal from the oil.

One embodiment of hydro-desulfurization of heavy oil in a fixed-bed reactor is described. Heavy oil as referred to herein includes petroleum distillation residues such as reduced crude, vacuum residual oil and the like residual fractions, but does not include fractions of distillate oil only, such as kerosene, gas oil, vacuum gas oil, etc. In general, heavy oil has a sulfur content of 1 % by weight or more, a nitrogen content of 200 ppm by weight or more, a residual carbonaceous content of 5 % by weight or more, a vanadium content of 5 ppm or more, and an asphaltene content of 0.5 % or more. For example, it includes, in addition to the reduced crude and other residual fractions noted above, crude oil, asphalt oil, thermally-cracked oil, tar-sand oil, and even mixed oil comprising them. Heavy oil to be processed herein may be any one noted above, but is preferably reduced crude, vacuum residual oil, mixed oil of vacuum residual oil or asphalt oil with cracked gas oil, etc.

Regarding the preferred conditions for hydrogenation of heavy oil in the invention, the reaction temperature may fall generally between 300 and 450°C, but preferably between 350 and 420°C, more preferably between 370 and 410°C; the hydrogen partial pressure may fall generally between 7.0 and 25.0 MPa, but preferably between 10.0 and 18.0 MPa; the liquid hourly space velocity may fall generally between 0.01 and 10 hrs$^{-1}$, but preferably between 0.1 and 5 hrs$^{-1}$, more preferably between 0.1 and 1 hr$^{-1}$; and the ratio of hydrogen/oil may fall generally between 500 and 2500 Nm$^3$/kl, but preferably between 700 and 2000 Nm$^3$/kl.

For the planned vanadium deposition-based, heavy oil hydrogenation method of the invention, the hydrogenation plan that will meet the intended object is first selected from among the conditions mentioned above, then the planned vanadium removal from catalysts to be used is calculated on the basis of the thus-selected hydrogenation plan, and finally the hydrogenation catalyst of which the permissible metal limit, MPr, meets the requirements of the invention is selected. The thus-selected hydrogenation catalyst is favorable to the hydrogenation method.

Of the reaction conditions mentioned above, the necessary ones such as the reaction temperature will be suitably selected and defined for the hydrogenation method, whereby the processed oil produced in the method could have well-controlled sulfur content, metal content (e.g., nickel content, vanadium content), etc. For the regenerated hydrogenation catalyst of the invention, used catalysts which have heretofore been believed useless can be effectively utilized, and the regenerated hydrogenation catalyst is favorable to hydrogenation of residual oil and others.

One embodiment of the planned vanadium deposition-based, heavy oil hydrogenation method of the invention is a controlled heavy oil hydrogenation method in which the hydrogenation plan is varied in the course of the hydrogenation term or the catalyst to be used is specifically defined. In this method, the permissible vanadium deposition on the catalyst being used is calculated from the permissible metal limit, MPr, of the catalyst and the actual vanadium deposition on the catalyst at the start of hydrogenation or at some time during the term of hydrogenation, and the hydrogenation plan for the method is established. Based on the thus-established hydrogenation plan, hydrogenation is further continued for the residual term according to the controlled method. Concretely, the hydrogenation method of this embodiment is so controlled that that VAp2 shall be smaller than the value to be obtained by subtracting VAc from MPr, with MPr indicating the permissible metal limit of the hydrogenation catalyst used, VAc indicating the actual metal deposition on the hydrogenation catalyst used, and VAp2 indicating the residual, planned vanadium deposition on the same to be obtained on the basis of the hydrogenation plan for the residual hydrogenation term, precisely;

VAc indicating the actual vanadium deposition on the hydrogenation catalyst used (% by weight), which is based on the fresh catalyst, and

VAp2 indicating the planned vanadium deposition on the catalyst for the residual hydrogenation term (% by weight), which is based on the fresh catalyst.

The heavy oil hydrogenation term includes the time at which the hydrogenation has been started. At the time at which the hydrogenation has been started, the actual metal deposition VAc is 0. Concretely, VAc and VAp2 can be calculated according to the formula [2] that indicates VAp. In formula [2], VAc shall apply to the term from the start of hydrogenation to the i-th hydrogenation; and VAp2 shall apply to the residual hydrogenation term.

Of the reaction conditions mentioned above, the necessary ones such as the reaction temperature will be suitably selected and defined for the controlled hydrogenation method of this embodiment, whereby the processed oil produced in the method could have well-controlled sulfur content, metal content (e.g., nickel content, vanadium content), etc. For the planned vanadium deposition-based, heavy oil hydrogenation method of the invention, used catalysts which have heretofore been believed useless can be effectively utilized, and the method is favorable to hydrogenation of residual oil and others. In the method, the term before which the catalyst used will be completely deactivated by vanadium deposition thereon can be estimated, and catalysts can be efficiently used until the term.

The invention is described more concretely with reference to the following Examples, which, however, are not intended to restrict the scope of the invention.

[Example 1]

(1) Preparation of fresh catalyst:

630 g of molybdenum oxide and 150 g, in terms of NiO, of nickel carbonate were dissolved in ion-exchanged water along with malic acid. The dipping liquid thus prepared had a total volume of 2000 ml. Its water content was controlled in accordance with the water absorption of the carrier to be dipped in the liquid. The carrier is a four-leaved alumina carrier having a specific surface area of 230 $m^2$/g, a mean pore size of 120 Å and a pore volume of 0.69 ml/g. 4000 g of the carrier was dipped in the liquid. This was dried at 120°C for 3 hours, and then baked at 500°C for 5 hours to prepare a fresh catalyst 1.

(2) Hydrogenation for preparing used catalyst:

As in Fig. 1, a downward flow-type, fixed-bed reactor was divided into four beds (all, the same by volume). A commercially-available catalyst for metal removal was filled into the uppermost bed (referred to as the first bed - the same shall apply hereunder), while the fresh catalyst 1 was into the remaining three beds (second to fourth beds). In that condition, the catalysts were pre-sulfurized in an ordinary manner. Next, reduced crude was passed through the reactor for hydro-desulfurization for 360 days. The desulfurization was continued while the reaction temperature was so monitored that the sulfur content of the essential fraction (distillate having a boiling point of not lower than 343°C) of the processed oil could be constant (0.3 % by weight). On day 360, the reaction temperature reached 400°C. Typical properties of the reduced crude (reduced crude 1) processed herein are given in Table 1 along with the methods for measuring them; and the reaction condition for hydro-desulfurization is in Table 2.

(3) Preparation of regenerated catalyst:

The catalysts in the reactor were washed with gas oil, and then dried with nitrogen gas introduced thereinto. Next, the catalysts were taken out of the reactor. These were used catalysts. The used catalyst taken out of the fourth bed (this is referred to as a used catalyst 1) and screened to remove aggregates and powdery particles. About 100 g of the thus-screened, used catalyst 1 was dried in a rotary kiln (rotating speed: 5 revolutions/min) at 300°C for 1 hour with 100 % nitrogen gas being introduced thereinto at a flow rate of 100 cc/min. Next, this was calcined at 450°C for 3 hours with a mixed gas of 50 % nitrogen gas and 50 % air being introduced into the kiln at a flow rate of 100 cc/min. The resulting catalyst was cooled, and again screened to remove aggregates and powdery particles. The thus-regenerated catalyst is referred to as a regenerated catalyst 1. The composition of the fresh catalyst 1, the used catalyst 1 and the regenerated catalyst 1 are given in Table 3; and the shape and the physical properties thereof are in Table 4-1.

(4) Evaluation of regenerated catalyst:

As in Fig. 1, a downward flow-type, fixed-bed reactor was divided into four beds (all the same by volume). A catalyst for metal removal was filled into the first bed, the regenerated catalyst 1 was into the second bed just below the first bed, and the fresh catalyst 1 was into the remaining beds. In that condition, the catalysts were pre-sulfurized in an ordinary manner. Next, the reduced crude 1 was passed through the reactor for hydrogenation for 360 days. The hydrogenation was continued while the reaction temperature was so monitored that the sulfur content of the essential fraction (distillate having a boiling point of not lower than 343°C) of the processed oil could be constant (0.3 % by weight). On day 360, the reaction temperature reached 400°C. The condition for the hydrogenation is shown in Table 5; and the properties of the processed oil are in Table 6.

The methods for measuring the properties of the processed oil are the same as those for measuring the properties of the reduced crude 1 shown in Table 1. (The same shall apply to the processed oil to be mentioned hereinunder.)

[Example 2]

(1) Evaluation of once-regenerated catalyst:

The regenerated catalyst 1 that had been prepared in the same manner as in Example 1 was evaluated in the same manner as in Example 1. In this, however, the catalyst was filled into the fourth bed but not into the second bed. The properties of the processed oil are given in Table 6.

(2) Preparation of twice-regenerated catalyst, and evaluation thereof:

After having been evaluated as in the previous step (1), the used catalyst in the fourth bed (this is referred to as a twice-used catalyst 1) was regenerated in the same manner as in the step (3) in Example 1. The thus-regenerated catalyst is referred to as a twice-regenerated catalyst 1. The twice-regenerated catalyst 1 was evaluated in the same manner as in the previous step (1) where the once-regenerated catalyst 1 was evaluated. (The outline of the process is schematically shown in Fig. 2.) The composition of the twice-used catalyst 1 and the twice-regenerated catalyst 1 are given in Table 3; the shape and the physical properties thereof are in Table 4-2; and the properties of the processed oil are in Table 6.

[Example 3]

(1) Preparation of fresh catalyst:

590 g of molybdenum oxide and 150 g, in terms of NiO, of basic nickel carbonate were dissolved in ion-exchanged water along with malic acid. The dipping liquid thus prepared had a total volume of 2000 ml. Its water content was controlled in accordance with the water absorption of the carrier to be dipped in the liquid. The carrier is a four-leaved silica-alumina carrier having a specific surface area of 185 m$^2$/g, a mean pore size of 150 Å and a pore volume of 0.69 ml/g. 4000 g of the carrier was dipped in the liquid. This was dried at 120°C for 3 hours, and then baked at 500°C for 5 hours to prepare a fresh catalyst 2.

(2) Preparation of used catalyst and regenerated catalyst:

A used catalyst 2 and a regenerated catalyst 2 were prepared in the same manner as in Example 1. In this, however, the fresh catalyst 2 but not the fresh catalyst 1 was used, and the used catalyst in the second bed but not in the fourth bed was regenerated. The composition of the fresh catalyst 2, the used catalyst 2 and the regenerated catalyst 2 are given in Table 7; and the shape and the physical properties thereof are in Table 8.

(3) Evaluation of regenerated catalyst:

The regenerated catalyst was evaluated in the same manner as in Example 1. In this, however, the fresh catalyst 2 but not the fresh catalyst 1 was used, and the regenerated catalyst 2 but not the regenerated catalyst 1 was evaluated. (The outline of the process is schematically shown in Fig. 3.) The properties of the processed oil are given in Table 9.

[Comparative Example 1]

(1) Preparation of regenerated catalyst:

A used catalyst 3 and a regenerated catalyst 3 were prepared in the same manner as in Example 1. In this, however, the used catalyst in the second bed but not in the fourth bed was regenerated. The composition of the used catalyst 3 and the regenerated catalyst 3 are given in Table 10; and the shape and the physical properties thereof are in Table 11.

(2) Evaluation of regenerated catalyst:

The regenerated catalyst was evaluated in the same manner as in Example 1. In this, however, the regenerated catalyst 3 but not the regenerated catalyst 1 was filled into the second bed but not into the fourth bed. (The outline of the process is schematically shown in Fig. 3.) Regarding the reaction condition, the reaction temperature was kept constant at 400°C throughout the process in this Comparative Example 1, though it was so controlled that the sulfur content of the essential fraction (distillate having a boiling point of not lower than 343°C) of the processed oil could be constant (0.3 % by weight) at 400°C in Example 1. The properties of the processed oil on day 360 are given in Table 9.

Table 1

| Properties of reduced crude 1 | | |
|---|---|---|
| Items Measured | Reduced Crude 1 | Method for Measurement |
| Density (15°C, g/cm$^3$) | 0.974 | JIS K-2249 |
| Kinematic Viscosity (50°C, cSt) | 600 | JIS K-2283 |
| Carbonaceous Residue (wt.%) | 9.3 | JIS K-2270 |
| Asphaltene (wt.%) | 5.1 | IP 143 |
| Impurity Content (by weight) | | |
| Sulfur Content (%) | 3.48 | JIS K-2541 |
| Nitrogen Content (ppm) | 1880 | JIS K-2609 |
| Vanadium Content (ppm) | 42 | JPI-5S-10-79 |
| Nickel Content (ppm) | 22 | JPI-5S-11-79 |
| Distillate Fractions (%) | | JIS K-2254 |
| up to 343°C | 3 | |
| from 343 to 525°C | 62 | |
| over 525°C | 35 | |

Table 2

| Hydrogenation condition for preparing used catalyst | |
|---|---|
| | Example 1 |
| Starting Oil | reduced crude |
| Hydrogen Partial Pressure (MPa) | 13.5 |
| Liquid Hourly Space Velocity (/hr) | 0.3 |
| Ratio of Hydrogen/Oil (Nm$^3$/kl) | 680 |

Table 2 (continued)

| Hydrogenation condition for preparing used catalyst | |
|---|---|
| | Example 1 |
| Starting Oil | reduced crude |
| Sulfur Content of Essential Fraction of Processed Oil (wt.%) | 0.3 |
| Reaction Time Continued (days) | 360 |

Table 3

| Composition of catalyst 1 | | | | | |
|---|---|---|---|---|---|
| Type of Catalyst | Fresh Catalyst 1 | Used Catalyst 1 | Regenerated Catalyst 1 | Twice-used Catalyst 1 | Twice-regenerated Catalyst 1 |
| | Example 1 | Example 1 | Example 1 | Example 2 | Example 2 |
| Carrier | alumina | alumina | alumina | alumina | alumina |
| Metal Content (wt.%) | | | | | |
| Molybdenum | 8.8 | 8.8 | 8.8 | 8.8 | 8.8 |
| Nickel | 2.4 | 4.4 | 4.4 | 6.4 | 6.4 |
| Cobalt | - | - | - | - | - |
| Vanadium | - | 4.0 | 4.0 | 8.0 | 8.0 |
| Iron ($Fe_2O_3$) | - | - | - | - | - |
| Carbon Content (wt.%) | - | 30 | 0.7 | 30.7 | 0.7 |
| Sulfur Content (wt.%) | - | 5 | 1.0 | 5.3 | 1.3 |

Table 4-1

| Shape and Physical Properties of Catalyst 1 | | | |
|---|---|---|---|
| Type of Catalyst | Fresh Catalyst 1 | Used Catalyst 1 | Regenerated Catalyst 1 |
| Shape (on average) | four-leaved columnar | four-leaved columnar | four-leaved columnar |
| Length (mm) | 3 | 2.8 | 2.8 |
| not longer than 1.5 mm (wt.%) | 2 | 8 | 3 |
| not longer than 1.0 mm (wt.%) | <1 | 3 | <1 |
| Outer surface area ($\times 10^6$ m$^2$) | 13.8 | - | 13.0 |
| Volume ($\times 10^9$ m$^3$) | 3.0 | - | 2.8 |
| Pore structure (on average) | | | |
| Specific surface area (m$^2$/g) | 204 | 105 | 181 |
| Pore volume (cc/g) | 0.6 | 0.25 | 0.52 |
| Pore diameter (Å) | 120 | | 120 |
| Permissible metal limit and other parameters* | | | |
| PV/2Vv | 78.9 | | 78.9 |
| $(PD)^{1.3}$ ($\times 10^{12}$) | 50.4 | | 50.4 |
| Sp/Vp | 4600 | | 4600 |
| VA | 0 | | 4 |
| MPr | 14.6 | | 10.6 |

*The units of the permissible metal limit and other parameters are as in claims.

Table 4-2

| Shape and Physical Properties of Catalyst 1 | | |
|---|---|---|
| Type of Catalyst | Twice-used Catalyst 1 | Twice-regenerated Catalyst 1 |
| Shape (on average) | four-leaved columnar | four-leaved columnar |
| Length (mm) | 2.6 | 2.6 |
| not longer than 1.5 mm (wt.%) | 8 | 3 |
| not longer than 1.0 mm (wt.%) | 3 | <1 |
| Outer surface area ($\times 10^6$ m$^2$) | - | 12.5 |
| Volume ($\times 10^9$ m$^3$) | - | 2.6 |
| Pore structure (on average) | | |
| Specific surface area (m$^2$/g) | 101 | 172 |
| Pore volume (cc/g) | 0.22 | 0.50 |
| Pore diameter (Å) | | 120 |
| Permissible metal limit and other parameters* | | |
| PV/2Vv | | 78.9 |
| (PD)$^{1.3}$($\times 10^{12}$) | | 50.4 |
| Sp/Vp | | 4600 |
| VA | | 8 |
| MPr | | 6.6 |

*The units of the permissible metal limit and other parameters are as in claims.

Table 5

| Hydrogenation condition for evaluating regenerated catalyst | |
|---|---|
| | Example 1 |
| Starting Oil | Reduced Crude 1 |
| Hydrogen Partial Pressure (MPa) | 13.5 |
| Liquid Hourly Space Velocity (/hr) | 0.3 |
| Ratio of Hydrogen/Oil (Nm$^3$/kl) | 680 |
| Sulfur Content of Essential Fraction of Processed Oil (wt.%) | 0.3* |
| Reaction Time Continued (days) | 360 |

*After having reached 400°C, the reaction temperature was so controlled that it should not be over 400°C.

Table 6

| Properties of processed oil | | | |
|---|---|---|---|
| Items Measured | Example 1 | Example 2 | Example 2 |
| Regenerated Catalyst | Regenerated Catalyst 1 | Regenerated Catalyst 1 | Twice-regenerated Catalyst 1 |
| Density (15°C, g/cm$^3$) | 0.917 | 0.920 | 0.919 |
| Kinematic Viscosity (50°C, cSt) | 86 | 102 | 105 |
| Carbonaceous Residue (wt.%) | 4.3 | 4.8 | 5.1 |
| Asphaltene (wt.%) | 1.2 | 1.3 | 1.4 |
| Impurity Content (by weight) | | | |
| Sulfur Content (%) | 0.33 | 0.36 | 0.29 |
| Nitrogen Content (ppm) | 960 | 994 | 1160 |
| Vanadium Content (ppm) | 10.6 | 11.6 | 10.6 |
| Nickel Content (ppm) | 6.7 | 7.5 | 6.7 |
| Distillate Fractions (%) | | | |
| up to 343°C | 18 | 18 | 18 |
| from 343 to 525°C | 49 | | |
| over 525°C | 33 | | |
| over 343°C | | 82 | 82 |

*Except for the proportion of the distillate fractions, the properties of the processed oil are those of the distillate fraction of over 343°C.

Table 7

| Composition of catalyst 2 | | | |
|---|---|---|---|
| Type of Catalyst | Fresh Catalyst 2 | Used Catalyst 2 | Regenerated Catalyst 2 |
| | Example 3 | Example 3 | Example 3 |
| Carrier | alumina-silica | alumina-silica | alumina-silica |
| Metal Content (wt.%) | | | |
| Molybdenum | 8.3 | 8.3 | 8.3 |
| Nickel | 2.5 | 6.5 | 6.5 |
| Cobalt | - | | |
| Vanadium | - | 8.0 | 8.0 |
| Iron (Fe$_2$O$_3$) | - | | |
| Carbon Content (wt.%) | - | 30 | 0.7 |
| Sulfur Content (wt.%) | - | 5 | 1.0 |

Table 8

| Shape and Physical Properties of Catalyst 2 | | | |
|---|---|---|---|
| Type of Catalyst | Fresh Catalyst 2 | Used Catalyst 2 | Regenerated Catalyst 2 |
| Shape (on average) | four-leaved columnar | four-leaved columnar | four-leaved columnar |
| Length (mm) | 3 | 2.8 | 2.8 |
| not longer than 1.5 mm (wt.%) | 2 | 8 | 3 |
| not longer than 1.0 mm (wt.%) | <1 | 3 | <1 |
| Outer surface area ($\times 10^6$ m$^2$) | 13.8 | - | 13.0 |
| Volume ($\times 10^9$ m$^3$) | 3.0 | - | 2.8 |
| Pore structure (on average) | | | |
| Specific surface area (m$^2$/g) | 160 | 105 | 181 |
| Pore volume (cc/g) | 0.6 | 0.25 | 0.52 |
| Pore diameter (Å) | 150 | | 150 |
| Permissible metal limit and other parameters* | | | |
| PV/2Vv | 78.9 | | 78.9 |
| (PD)$^{1.3}$($\times 10^{12}$) | 67.4 | | 67.4 |
| Sp/Vp | 4600 | | 4600 |
| VA | 0 | | 8 |
| MPr | 19.6 | | 11.6 |

*The units of the permissible metal limit and other parameters are as in claims.

EP 1 066 879 A1

Table 9

| Properties of processed oil | | |
|---|---|---|
| Items Measured | Example 3 | Comparative Example 1 |
| Regenerated Catalyst | Regenerated Catalyst 2 | Regenerated Catalyst 3 |
| Density (15°C, g/cm$^3$) | 0.918 | 0.922 |
| Kinematic Viscosity (50°C, cSt) | 97 | 110 |
| Carbonaceous Residue (wt.%) | 4.6 | 5.4 |
| Asphaltene (wt.%) | 1.1 | 1.7 |
| Impurity Content (by weight) | | |
| Sulfur Content (%) | 0.32 | 0.42 |
| Nitrogen Content (ppm) | 1050 | 1230 |
| Vanadium Content (ppm) | 8.9 | 17.6 |
| Nickel Content (ppm) | 5.8 | 11.2 |
| Distillate Fractions (%) | | |
| up to 343°C | 18 | 18 |
| from 343 to 525°C | | |
| over 525°C | | |
| over 343°C | 82 | 82 |

*Except for the proportion of the distillate fractions, the properties of the processed oil are those of the distillate fraction of over 343°C.

Table 10

| Composition of catalysts 1, 3 | | | |
|---|---|---|---|
| Type of Catalyst | Fresh Catalyst 1 | Used Catalyst 3 | Regenerated Catalyst 3 |
| | Example 1 | Comparative Example 1 | Comparative Example 1 |
| Carrier | alumina | alumina | alumina |
| Metal Content (wt.%) | | | |
| Molybdenum | 8.8 | 8.8 | 8.8 |
| Nickel | 2.4 | 6.4 | 6.4 |
| Cobalt | - | | |
| Vanadium | - | 14.0 | 14.0 |
| Iron (Fe$_2$O$_3$) | - | | |
| Carbon Content (wt.%) | - | 25 | 0.9 |
| Sulfur Content (wt.%) | - | 5 | 1.1 |

21

Table 11

| Shape and Physical Properties of Catalysts 1, 3 | | | |
|---|---|---|---|
| Type of Catalyst | Fresh Catalyst 1 | Used Catalyst 3 | Regenerated Catalyst 3 |
| Shape (on average) | four-leaved columnar | four-leaved columnar | four-leaved columnar |
| Length (mm) | 3 | 2.8 | 2.8 |
| not longer than 1.5 mm (wt.%) | 2 | 8 | 3 |
| not longer than 1.0 mm (wt.%) | <1 | 3 | <1 |
| Outer surface area ($\times 10^6$ m$^2$) | 13.8 | - | 13.0 |
| Volume ($\times 10^9$ m$^3$) | 3.0 | - | 2.8 |
| Pore structure (on average) | | | |
| Specific surface area (m$^2$/g) | 204 | 87 | 181 |
| Pore volume (cc/g) | 0.6 | 0.18 | 0.52 |
| Pore diameter (Å) | 120 | | 120 |
| Permissible metal limit and other parameters* | | | |
| PV/2Vv | 78.9 | | 78.9 |
| $(PD)^{1.3}(\times 10^{12})$ | 50.4 | | 50.4 |
| Sp/Vp | 4600 | | 4600 |
| VA | 0 | | 14 |
| MPr | 14.6 | | 0.6 |

*The units of the permissible metal limit and other parameters are as in claims.

As in Comparative Example 1, the catalysts not meeting the requirements of the invention reached the uppermost reaction temperature (in this, 400°C) within 270 days, and became useless for the intended hydrogenation before the aimed term of 360 days.

[Example 4]

(1) Preparation of fresh catalyst 4:

630 g of molybdenum oxide and 150 g, in terms of NiO, of nickel carbonate were dissolved in ion-exchanged water along with malic acid. The dipping liquid thus prepared had a total volume of 2000 ml. Its water content was controlled in accordance with the water absorption of the carrier to be dipped in the liquid. The carrier is a four-leaved alumina carrier having a specific surface area of 230 m$^2$/g, a mean pore size of 120 Å and a pore volume of 0.69 ml/g. 4000 g of the carrier was dipped in the liquid. This was dried at 120°C for 3 hours, and then baked at 500°C for 5 hours to prepare a fresh catalyst 4.

(2) Hydrogenation with fresh catalyst 4:

A downward flow-type, fixed-bed reactor was divided into four beds (all the same by volume). A commercially-available catalyst for metal removal was filled into the uppermost bed, while the fresh catalyst 4 was into the remaining three beds. In that condition, the catalysts were pre-sulfurized in an ordinary manner. Next, reduced crude was passed through the reactor for hydro-desulfurization and metal removal for 360 days. The hydrogenation was continued while the reaction temperature was so monitored that the sulfur content of the essential fraction (distillate having a boiling point of not lower than 343°C) of the processed oil could be constant (0.3 % by weight). The properties of the starting oil (reduced crude 1) and the properties of the processed oil on day 360 are given in Table 12 along with the methods for measuring them. The reaction condition for hydrogenation is in Table 13. The composition of the fresh catalyst 4 is in Table 14; and the shape and the physical properties thereof are in Table 15.

[Example 5]

(1) Preparation of fresh catalyst 5:

590 g of molybdenum oxide and 150 g, in terms of NiO, of basic nickel carbonate were dissolved in ion-exchanged water along with malic acid. The dipping liquid thus prepared had a total volume of 2000 ml. Its water content was controlled in accordance with the water absorption of the carrier to be dipped in the liquid. The carrier is a four-leaved silica-alumina carrier having a specific surface area of 185 m$^2$/g, a mean pore size of 150 Å and a pore volume of 0.69 ml/g. 4000 g of the carrier was dipped in the liquid. This was dried at 120°C for 3 hours, and then baked at 500°C for 5 hours to prepare a fresh catalyst 5. The composition of the fresh catalyst 5 is shown in Table 14; and the shape arid the physical properties thereof are in Table 15.

(2) Hydrogenation with fresh catalyst 5:

A downward flow-type, fixed-bed reactor was divided into four beds (all the same by volume). A commercially-available catalyst for metal removal was filled into the uppermost bed, while the fresh catalyst 5 was into the remaining three beds. In that condition, the catalysts were pre-sulfurized in an ordinary manner. Next, reduced crude was passed through the reactor for hydro-desulfurization and metal removal for 360 days. The hydrogenation was continued while the reaction temperature was so monitored that the sulfur content of the essential fraction (distillate having a boiling point of not lower than 343°C) of the processed oil could be constant (0.4 % by weight). The properties of the starting oil (reduced crude 2) and the properties of the processed oil on day 360 are given in Table 17. The reaction condition for hydrogenation is in Table 16. The composition of the fresh catalyst 5 is in Table 14; and the shape and the physical properties thereof are in Table 15.

[Example 6]

(1) Preparation of regenerated catalyst 4:

Under the same condition as in Example 5 (2), hydrogenating reduced crude with the fresh catalyst 5 was started. Before continued for 360 days, the hydrogenation was stopped when the vanadium deposition on the catalyst used would be 4 % by weight, and the catalyst was taken out of the reactor. A part of the catalyst was regenerated by calcining it. The regenerated catalyst is referred to as a regenerated catalyst 4. The vanadium deposition on the regenerated catalyst 4 was 4 % by weight. The composition of the regenerated catalyst 4 is shown in Table 14; and the shape and the physical properties thereof are in Table 15.

(2) Hydrogenation with regenerated catalyst 4:

In the same manner as in Example 4 (2), the reduced crude 1 was processed for hydro-desulfurization and metal removal for 360 days. In this, however, the regenerated catalyst 4 but not the fresh catalyst 4 was used. The properties of the processed oil on day 360 are given in Table 18.

[Comparative Example 2]

In the same manner as in Example 5 (2), the reduced crude 2 was processed for hydro-desulfurization and metal removal. In this, however, the fresh catalyst 4 but not the fresh catalyst 5 was used. While the process of hydro-desulfurization combined with metal removal was continued, the reaction temperature reached the uppermost limit for the device of 400°C on day 300. After that, the reaction temperature was kept at 400°C without varying the other conditions, and the hydrogenation process was further continued up to 360 days. (In this process, the sulfur content of the distillate fraction above 343°C in the processed oil could not be controlled.) The properties of the processed oil on day 360 are given in Table 18.

Table 12

| Properties of starting oil and processed oil | | | |
|---|---|---|---|
| Items Measured | Starting Oil Reduced Crude 1 | Processed Oil | Method for Measurement |
| Density (15°C, g/cm$^3$) | 0.974 | 0.920 | JIS K-2249 |
| Kinematic Viscosity (50°C, cSt) | 600 | 85 | JIS K-2283 |
| Carbonaceous Residue (wt.%) | 9.3 | 4.3 | JIS K-2270 |
| Asphaltene (wt.%) | 5.1 | 1.2 | IP 143 |
| Impurity Content (by weight) | | | |
| Sulfur Content (%) | 3.48 | 0.30 | JIS K-2541 |
| Nitrogen Content (ppm) | 1880 | 900 | JIS K-2609 |
| Vanadium Content (ppm) | 42 | 7.5 | JPI-5S-10-79 |
| Nickel Content (ppm) | 22 | 6.5 | JPI-5S-11-79 |
| Distillate Fractions (%) | | | JIS K-2254 |
| up to 343°C | 3 | 18 | |
| from 343 to 525°C | 62 | 49 | |
| over 525°C | 35 | 33 | |

*Except for the proportion of the distillate fractions, the properties of the processed oil are those of the distillate fraction of over 343°C.

Table 13

| Planned hydrogenation condition in Example 4 | |
|---|---|
| | Example 4 |
| Starting Oil | Reduced Crude 1 |
| Hydrogen Partial Pressure (MPa) | 13.5 |
| Liquid Hourly Space Velocity (/hr) | 0.3 |
| Ratio of Hydrogen/Oil (Nm$^3$/kl) | 680 |
| Sulfur Content of Essential Fraction of Processed Oil (wt.%) | 0.3 |
| Reaction Time Continued (days) | 360 |
| Planned Desulfurization (wt.%) | 91.4 |
| Planned vanadium removal (wt.%) | 82.8 |
| VAp (%) | 13.6 |

Table 14

| Composition of catalyst | | | |
|---|---|---|---|
| Type of Catalyst | Fresh Catalyst 4 | Fresh Catalyst 5 | Regenerated Catalyst 4 |
| | Example 4 | Example 5 | Example 6 |
| Carrier | alumina | alumina-silica | alumina-silica |
| Metal Content (wt.%) | | | |
| Molybdenum | 8.8 | 8.3 | 8.3 |
| Nickel | 2.4 | 2.5 | 2.5 |
| Cobalt | 0 | 0 | 0 |
| Vanadium | 0 | 0 | 4.0 |
| Carbon Content (wt.%) | 0 | 0 | 0.7 |
| Sulfur Content (wt.%) | 0 | 0 | 1.0 |

Table 15

| Shape and Physical Properties of Catalyst | | | |
|---|---|---|---|
| Type of Catalyst | Fresh Catalyst 4 | Fresh Catalyst 5 | Regenerated Catalyst 4 |
| Shape (on average) | four-leaved columnar | four-leaved columnar | four-leaved columnar |
| Length (mm) | 3 | 3 | 2.8 |
| not longer than 1.5mm (wt.%) | 2 | 2 | 3 |
| not longer than 1.0 mm (wt.%) | <1 | <1 | <1 |
| Outer surface area ($\times 10^6$ m$^2$) | 13.8 | 13.8 | 13.0 |
| Volume ($\times 10^9$ m$^3$) | 3.0 | 3.0 | 2.8 |
| Pore structure (on average) | | | |
| Specific surface area (m$^2$/g) | 204 | 160 | 160 |
| Pore volume (cc/g) | 0.6 | 0.6 | 0.6 |
| Pore diameter (Å) | 120 | 150 | 150 |
| Permissible metal limit and other parameters* | | | |
| PV/2Vv | 78.9 | 78.9 | 78.9 |
| (PD)$^{1.3}$($\times 10^{12}$) | 50.4 | 67.4 | 67.4 |
| Sp/Vp | 4600 | 4600 | 4600 |
| VA | 0 | 0 | 4 |
| MPr | 14.6 | 19.6 | 15.6 |

*The units of the permissible metal limit and other parameters are as in claims.

Table 16

| Planned hydrogenation condition in Example 5 | |
|---|---|
| | Example 5 |
| Starting Oil | Reduced Crude 2 |
| Hydrogen Partial Pressure (MPa) | 13.5 |
| Liquid Hourly Space Velocity (/hr) | 0.3 |
| Ratio of Hydrogen/Oil (Nm$^3$/kl) | 680 |
| Sulfur Content of Essential Fraction of Processed Oil (wt.%) | 0.4 |
| Reaction Time Continued (days) | 360 |
| Planned Desulfurization (wt.%) | 89.1 |
| Planned vanadium removal (wt.%) | 78.3 |
| VAp (%) | 17.5 |

Table 17

| Properties of starting oil and processed oil in Example 5 | | |
|---|---|---|
| Items Measured | Starting Oil (Reduced Crude 2) | Processed Oil |
| Density (15°C, g/cm$^3$) | 0.996 | 0.925 |
| Kinematic Viscosity (50°C, cSt) | 2000 | 128 |
| Carbonaceous Residue (wt.%) | 15.5 | 4.6 |
| Asphaltene (wt.%) | 7.9 | 1.9 |
| Impurity Content (by weight) | | |
| Sulfur Content (%) | 4.61 | 0.4 |
| Nitrogen Content (ppm) | 2600 | 1400 |
| Vanadium Content (ppm) | 56 | 12.2 |
| Nickel Content (ppm) | 29 | 7.8 |
| Distillate Fractions (%) | | |
| up to 343°C | 2 | 20 |
| from 343 to 525°C | 53 | 46 |
| over 525°C | 43 | 34 |

*Except for the proportion of the distillate fractions, the properties of the processed oil are those of the distillate fraction of over 343°C.

26

Table 18

| Properties of processed oil in Example 6 and Comparative Example 2 | | |
|---|---|---|
| Items Measured | Example 6 | Comparative Example 2 |
| Density (15°C, g/cm$^3$) | 0.922 | 0.932 |
| Kinematic Viscosity (50°C, cSt) | 105 | 187 |
| Carbonaceous Residue (wt.%) | 4.4 | 4.9 |
| Asphaltene (wt.%) | 1.0 | 2.8 |
| Impurity Content (by weight) | | |
| Sulfur Content (%) | 0.3 | 0.68 |
| Nitrogen Content (ppm) | 1050 | 1700 |
| Vanadium Content (ppm) | 7.1 | 16.8 |
| Nickel Content (ppm) | 6.2 | 8.9 |
| Distillate Fractions (%) | | |
| up to 343°C | 17 | 20 |
| from 343 to 525°C | 52 | 42 |
| over 525°C | 31 | 38 |

*Except for the proportion of the distillate fractions, the properties of the processed oil are those of the distillate fraction of over 343°C.

In Examples 4 to 6 in which MPr was larger than VAp, the processed oil obtained had the planned properties (with respect to the sulfur content) to the last stage (on day 360) of the planned hydrogenation process. In Comparative Example 2 in which MPr was smaller than VAp, however, the reaction temperature reached the uppermost limit (400°C) for the device in the middle of the hydrogenation process (on day 300). After that, the hydrogenation was continued at the temperature of the uppermost limit, but the processed oil could not have the intended properties (sulfur content of 0.4 %)

INDUSTRIAL APPLICABILITY

The regenerated hydrogenation catalyst of the invention is, even when used and regenerated plural times, well usable in hydrogenation of heavy oil, like ordinary fresh catalysts, so far as it meets the requirements of the invention. According to the invention, therefore, used catalysts are effectively recycled.
In the planned, heavy oil hydrogenation method of the invention, the catalyst to be used is appropriately selected in accordance with the specific hydrogenation plan for the method. While carrying out the method, therefore, no one will encounter process trouble including catalyst deactivation in the middle of the hydrogenation process.

**Claims**

1.    A regenerated hydrogenation catalyst for heavy oil, of which the permissible metal limit, MPr to be represented by the following formula [1] is at least 1:

$$\text{Permissible metal limit, MPr} = (PV/2Vv) \times \{8 \times 10^5 \times (PD)^{1.3}\} \times (Sp/Vp) - VA \qquad [1]$$

wherein;

PV indicates the pore volume of the catalyst while it is unused and fresh (m$^3$/kg),
Vv indicates the volume, in terms of vanadium sulfide, of vanadium having deposited by 1 % by weight on one kg of the fresh catalyst, and this is a constant of $3.8 \times 10^{-6}$ (m$^3$/%kg),

PD indicates the mean pore diameter of the fresh catalyst (m),

Sp indicates the mean outer surface area of one particle of the fresh catalyst ($m^2$),

Vp indicates the mean volume of one particle of the fresh catalyst ($m^3$),

VA indicates the existing vanadium deposit (% by weight), and this is based on the fresh catalyst.

2. The regenerated hydrogenation catalyst as claimed in claim 1, on which the existing vanadium deposit, VA, is at least 1.

3. The regenerated hydrogenation catalyst as claimed in claim 1 or 2, of which the carbon content is at most 15 % by weight.

4. The regenerated hydrogenation catalyst as claimed in any of claims 1 to 3, which has a specific surface area falling between 60 and 220 $m^2$/g.

5. The regenerated hydrogenation catalyst as claimed in any of claims 1 to 4, which has a pore volume falling between 0.3 and 1.2 cc/g.

6. The regenerated hydrogenation catalyst as claimed in any of claims 1 to 5, of which the particles have a maximum length falling between 1.6 and 10.0 mm on average with those having a maximum length of not larger than 1.5 mm accounting for at most 10 % by weight and those having a maximum length of not larger than 1.0 mm for at most 5 % by weight.

7. The regenerated hydrogenation catalyst as claimed in any of claims 1 to 6, of which the particles are substantially columnar and have a mean length in the axial direction falling between 1.6 and 10.0 mm with those having a length of not larger than 1.5 mm accounting for at most 10 % by weight and those having a length of not larger than 1.0 mm for at most 5 % by weight.

8. The regenerated hydrogenation catalyst as claimed in any of claims 1 to 7, for which a catalyst having at least one metal element of molybdenum, tungsten, nickel and cobalt carried on an inorganic oxide carrier is used in hydrogenation of heavy oil, and then regenerated.

9. The regenerated hydrogenation catalyst as claimed in claim 8, in which the inorganic oxide carrier is alumina, or alumina containing at most 30 % by weight of at least one oxide of silicon, phosphorus and boron.

10. The regenerated hydrogenation catalyst as claimed in claim 8 or 9, in which the metal element carried on the carrier is nickel and/or cobalt, as well as molybdenum.

11. The regenerated hydrogenation catalyst as claimed in claim 10, of which the molybdenum content falls between 0.1 and 25 % by weight in terms of $Mo_2O_3$, and the nickel and/or cobalt content falls between 0.1 and 10 % by weight in terms of $NiO_2$ or $CoO_2$.

12. A method for producing the regenerated hydrogenation catalyst of any of claims 1 to 11, which comprises subjecting a catalyst having been used in heavy oil hydrogenation to regeneration including oxidation.

13. A method of hydrogenating heavy oil, in which is used the regenerated hydrogenation catalyst of any of claims 1 to 11.

14. The method as claimed in claim 13, in which the hydrogenation is hydro-desulfurization or hydrogenation with metal removal.

15. A method of hydrogenating heavy oil, for which the hydrogenation catalyst to be in the reactor is such that its permissible metal limit MPr to be represented by the formula [1] stated in claim 1 is not lower than the vanadium deposition VAp thereon (represented by the following formula [2]) that is planned on the basis of the heavy oil hydrogenation plan for the method:

$$\text{Planned vanadium deposition, VAp} = \sum_{i=1}^{n} (RCi \times VCi \times DVi/CW) \qquad [2]$$

wherein;

VAp indicates the planned vanadium deposition (% by weight), and this is based on the fresh catalyst,
i indicates the i-th hydrogenation with one and the same catalyst in the reactor,
n indicates the last (n-th) hydrogenation with that catalyst in the reactor,
RCi indicates the planned cumulative oil feed in the i-th hydrogenation (kg),
VCi indicates the vanadium content of the crude oil being processed in the i-th hydrogenation (vanadium kg/crude oil kg),
DVi indicates the planned vanadium removal in the i-th hydrogenation (% by weight),
CW indicates the amount of the catalyst in the reactor (kg), and this is based on the fresh catalyst.

16. The heavy oil hydrogenation method as claimed in claim 15, in which the planned vanadium removal, DV, is estimated according to the following formula [3]:

$$\text{Planned vanadium removal, DV} = a \times DS + b \qquad [3]$$

wherein;

DS indicates the planned desulfurization (% by weight),
a is a factor, and $1.8 \leq a \leq 2.2$,
b is a factor, and $-105 \leq b \leq -95$.

17. The heavy oil hydrogenation method as claimed in claim 15 or 16, in which the hydrogenation catalyst used has a specific surface area falling between 60 and 220 $m^2$/g.

18. The heavy oil hydrogenation method as claimed in any of claim 15 to 17, in which the hydrogenation catalyst used has a pore volume falling between $0.3 \times 10^{-3}$ and $1.2 \times 10^{-3}$ $m^3$/kg.

19. The heavy oil hydrogenation method as claimed in any of claims 15 to 18, in which the particles of the hydrogenation catalyst used have a maximum length falling between 1.6 and 10.0 mm on average with those having a maximum length of not larger than 1.5 mm accounting for at most 10 % by weight and those having a maximum length of not larger than 1.0 mm for at most 5 % by weight.

20. The heavy oil hydrogenation method as claimed in any of claims 15 to 19, in which the particles of the hydrogenation catalyst used are substantially columnar and have a mean length in the axial direction falling between 1.6 and 10.0 mm with those having a length of not larger than 1.5 mm accounting for at most 10 % by weight and those having a length of not larger than 1.0 mm for at most 5 % by weight.

21. The heavy oil hydrogenation method as claimed in any of claims 15 to 20, in which the hydrogenation catalyst used has at least one metal element of molybdenum, tungsten, nickel and cobalt carried on an inorganic oxide carrier.

22. The heavy oil hydrogenation method as claimed in any of claims 15 to 21, in which the hydrogenation catalyst used is a regenerated catalyst as prepared by subjecting a catalyst having been used in heavy oil hydrogenation to regeneration including oxidation.

23. The heavy oil, hydrogenation method as claimed in any of claims 15 to 22, which is for hydro-desulfurization of heavy oil or for that combined with metal removal.

24. A method of hydrogenating heavy oil, which is so controlled that VAp2 shall be smaller than the value to be obtained by subtracting VAc from MPr, with MPr indicating the permissible metal limit of the hydrogenation catalyst used, VAc indicating the actual metal deposition on the hydrogenation catalyst used, and VAp2 indicating the residual, planned vanadium deposition on the same to be obtained on the basis of the hydrogenation plan for the residual hydrogenation term, precisely;

VAc indicating the actual vanadium deposition on the hydrogenation catalyst used (% by weight), which is based on the fresh catalyst, and
VAp2 indicating the planned vanadium deposition on the catalyst for the residual hydrogenation term (% by weight), which is based on the fresh catalyst.

**25.** The heavy oil hydrogenation method as claimed in claim 24, which is for hydro-desulfurization of heavy oil, for metal removal from heavy oil, or hydro-desulfurization thereof combined with metal removal.

Figure 1

Figure 2

Figure 3

Figure 4

Figure 5

# INTERNATIONAL SEARCH REPORT

International application No.

PCT/JP99/05283

**A. CLASSIFICATION OF SUBJECT MATTER**
Int.Cl⁷ B01J 35/10, 23/88, 38/12, 23/94, C10G 45/08

According to International Patent Classification (IPC) or to both national classification and IPC

**B. FIELDS SEARCHED**

Minimum documentation searched (classification system followed by classification symbols)
Int.Cl⁷ B01J 21/00-38/74, C10G 45/08

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2000 |
| Kokai Jitsuyo Shinan Koho | 1971-2000 | Jitsuyo Shinan Keisai Koho | 1996-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 54-99790, A (Chiyoda Corporation), 06 August, 1979 (06.08.79), | 1,3-5,8-14 |
| A | Claims; page 1, right column, lines 2-6; page 2, lower right column, lines 4-15; Examples 1, 2, 4 (Family: none) | 2,6,7,15-25 |
| X | EP, 156226, A2 (NIPPON OIL CO. LTD.), 02 October, 1985 (02.10.85), | 1-3,8-14 |
| A | Claims; Examples 1, 2 & JP, 60-190241, A Claims; Examples 1, 2 | 2-7,15-25 |
| X | JP, 5-132680, A (Sekiyu Sangyo Kasseika Center), 28 May, 1993 (28.05.93), | 1-4,8-13,15, 17,21,22 |
| A | page 4, Par. Nos. [0018]-[0021] (Family: none) | 5-7,14,16, 18-20,23-25 |
| A | JP, 7-268360, A (Cosmo Research Institute), 17 October, 1995 (17.10.95), Claims; page 2, Par. No. [0014] (Family: none) | 1-25 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 January, 2000 (11.01.00) | 18 January, 2000 (18.01.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP99/05283 |

C (Continuation).   DOCUMENTS CONSIDERED TO BE RELEVANT

| Category* | Citation of document, with indication, where appropriate, of the relevant passages | Relevant to claim No. |
|---|---|---|
| E,X | JP, 2000-470, A (Idemitsu Kosan Co., Ltd.), 07 January, 2000 (07.01.00), | 1-14 |
| E,A | Full text   (Family: none) | 15-25 |

Form PCT/ISA/210 (continuation of second sheet) (July 1992)

37